Europäisches Patentamt

European Patent Office

Office européen des brevets

(19)

(11) Publication number: **0 301 664**

**A2**

(12) **EUROPEAN PATENT APPLICATION**

(21) Application number: 88201617.3

(51) Int. Cl.4: **C08G 67/02**

(22) Date of filing: 26.07.88

(30) Priority: 30.07.87 NL 8701799

(43) Date of publication of application:
**01.02.89 Bulletin 89/05**

(84) Designated Contracting States:
**BE CH DE FR GB IT LI NL**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **van Broekhoven, Johannes
Adrianus Maria
Badhuisweg 3
NL-1031 CM Amsterdam(NL)**
Inventor: **Wife, Richard Lewin
Badhuisweg 3
NL-1031 CM Amsterdam(NL)**

(74) Representative: **Aalbers, Onno et al
P.O. Box 302
NL-2501 CH The Hague(NL)**

(54) Polymer preparation.

(57) Process for the preparation of polymers by copolymerizing a mixture of carbon monoxide with one or more olefinically unsaturated compounds in the presence of a catalyst composition based upon
a) a palladium compound,
b) an anion of an acid with a pKa of less than 6, and
c) a compound of the general formula $R_1R_2M_1$-R-$M_2R_3R_4$, wherein $M_1$ and $M_2$ represent similar or different elements chosen from the group made up of arsenic, antimony, phosphorus and nitrogen, wherein $R_1$, $R_2$, $R_3$ and $R_4$ represent similar or different hydrocarbon groups which may optionally be substituted with polar groups and wherein R represents a bivalent bridging group containing at least two carbon atoms in the bridge, characterized in that the copolymerization is effected in a ketone/alcohol mixture comprising more than 50 %vol of one or more aliphatic ketones containing at most 10 carbon atoms, and more than 5 %vol of one or more aliphatic alcohols containing at most 10 carbon atoms.

EP 0 301 664 A2

Xerox Copy Centre

## POLYMER PREPARATION

The invention relates to a process for the preparation of polymers of carbon monoxide with one or more olefinically unsaturated compounds.

High molecular weight linear polymers of carbon monoxide with one or more olefinically unsaturated compounds (for the sake of brevity referred to as A), in which the monomer units are present in alternating order and which polymers therefore consist of units of the general formula -(CO)-A'-, wherein A' represents a monomer unit derived from a monomer A used, can be prepared by using catalyst compositions based upon

a) a palladium compound,

b) an anion of an acid with a pKa of less than 6, and

c) a compound of the general formula $R_1R_2M_1$-R-$M_2R_3R_4$, wherein $M_1$ and $M_2$ are similar or different elements chosen from the group made up of arsenic, antimony, phosphorus and nitrogen, wherein $R_1$, $R_2$, $R_3$ and $R_4$ represent similar or different hydrocarbon groups which may optionally be substituted with polar groups and wherein R represents a bivalent bridging group containing at least two carbon atoms in the bridge.

The preparation of the polymers by using the above-mentioned catalyst compositions can be carried out by contacting the monomers with a solution of the catalyst composition in an organic diluent in which the polymers are insoluble. During the polymerization process the polymers are obtained in the form of a suspension in the diluent. Generally, the polymerization is terminated by cooling and releasing the pressure after the required degree of polymerization is reached. The polymers can be isolated from the suspension for instance by filtration or centrifugation. Organic diluents that have been found very suitable are aliphatic alcohols having at most 10 carbon atoms in the molecule (for the sake of brevity referred to as $C_{10}^-$ alcohols), such as methanol, ethanol and propanol.

With a view to their uses, the polymers are more valuable according as their molecular weights are higher. The molecular weights of the polymers can be influenced by the temperature at which the polymerization is carried out, in that at otherwise similar reaction conditions, a decrease in reaction temperature will lead to a higher molecular weight. However, a decrease in reaction temperature will be attended with two further effects. In the first place, a decrease in reaction temperature will bring with it a fall in polymerization rate and further, a decrease in reaction temperature will lead to a decreased polymer bulk density. In the present polymerization, a high reaction rate as well as the formation of polymers with a high bulk density are required. It has been found that, when the polymerization is carried out in a $C_{10}^-$ alcohol as the diluent, a decrease in reaction temperature aimed at attaining a rise in molecular weight will generally entail a decrease both of the polymerization rate and of the polymer bulk density.

The Applicant has carried out a research into the above-mentioned polymer preparation in order to investigate whether the use of organic diluents other than the thus far usual $C_{10}^-$ alcohols might lead to improved catalyst performance with regard to polymerization rates on the one hand and molecular weights and bulk densities of the polymers obtained on the other hand. Both singular diluents and mixtures of diluents were involved in the research. Initially, the results of the research were disappointing. It is true that by replacing the $C_{10}^-$ alcohols partly or wholly with other diluents, such as aliphatic ketones having at most 10 carbon atoms in the molecule (for the sake of brevity referred to as $C_{10}^-$ ketones), aliphatic carboxylic acid esters or aliphatic hydrocarbons, an increase in molecular weights could be attained at otherwise unchanged reaction conditions, but this was in all instances accompanied with a severe drop in polymerization rate. Over and above that, more often than not a fall in polymer bulk density was observed. Surprisingly it was found, however, that at otherwise similar reaction conditions, partial replacement of the $C_{10}^-$ alcohols with one or more $C_{10}^-$ ketones, namely in such a proportion that more than 50 %vol of the diluent consists of one or more $C_{10}^-$ ketones and more than 5 %vol of one or more $C_{10}^-$ alcohols, results in an increase both of the molecular weights and of the bulk densities of the polymers, while nevertheless the polymerization rates remain constant.

The present patent application therefore relates to a process for the preparation of polymers by copolymerizing a mixture of carbon monoxide with one or more olefinically unsaturated compounds in the presence of a catalyst composition based upon

a) a palladium compound,

b) an anion of an acid with a pKa of less than 6, and

c) a compound of the general formula $R_1R_2M_1$-R-$M_2R_3R_4$, wherein $M_1$ and $M_2$ represent similar or different elements chosen from the group made up of arsenic, antimony, phosphorus and nitrogen, wherein $R_1$, $R_2$, $R_3$ and $R_4$ represent similar or different hydrocarbon groups which may optionally be substituted with polar groups and wherein R represents a bivalent bridging group containing at least two carbon atoms in the bridge,

characterized in that the copolymerization is effected in a ketone/alcohol mixture comprising more than 50 %vol of one or more aliphatic ketones containing at most 10 carbon atoms, and more than 5 %vol of one or more aliphatic alcohols containing at most 10 carbon atoms.

The patent application further relates to the polymers thus prepared, as well as to shaped objects which consist at least partly of these polymers.

The palladium compound used in the catalyst compositions as component a) is preferably a palladium salt of a carboxylic acid and in particular palladium acetate. The preferred component b) in the catalyst compositions is an anion of an acid with a pKa of less than 4 (determined in aqueous solution at 18 °C) and in particular an anion of an acid with a pKa of less than 2. More specifically, preference is given to an anion of a sulphonic acid, such as para-toluenesulphonic acid or an anion of a carboxylic acid, such as trifluoro acetic acid. In the catalyst compositions, component b) is preferably present in a quantity of from 0.5 to 200 and in particular of from 1.0 to 100 equivalents per gram atom of palladium. Component b) may be taken up in the catalyst compositions in the form of an acid and/or in the form of a salt. Eligible salts include non-noble transition metal salts and in particular copper salts. If desired, components a) and b) may be used combined in a single compound. An example of such a compound is the complex Pd-$(CH_3CN)_2(O_3S-C_6H_4-CH_3)_2$ which can be prepared by the reaction in acetonitrile of either palladium chloride with silver para-tosylate, or palladium acetate with para-toluenesulphonic acid.

In the compounds used as component c), $M_1$ and $M_2$ are preferably similar to one another. Particular preference is given to components c) wherein $M_1$ and $M_2$ both represent phosphorus. In the catalyst compositions, component c) is preferably present in a quantity of 0.1-2 and in particular of 0.75-1.5 mol per mol of palladium compound. The groups $R_1$, $R_2$, $R_3$ and $R_4$ present in the compounds used as components c) are preferably aryl groups which may optionally be substituted with polar groups and in particular phenyl groups which may optionally be substituted with polar groups. Preferably, at least one of the groups $R_1$, $R_2$, $R_3$ and $R_4$ contains at least one polar substituent. Eligible polar substituents include dialkyl-amino groups, such as dimethyl-amino groups and alkoxy groups such as methoxy and tert.butoxy groups. Preference is given to alkoxy groups and in particular to methoxy groups as polar substituents. Particular preference is given to components c) in which the groups $R_1$, $R_2$, $R_3$ and $R_4$ are similar to one another. If one or more of the groups $R_1$, $R_2$, $R_3$ and $R_4$ are aryl groups comprising one or more polar substituents, at least one of these polar substituents preferably occupies a position ortho with respect to the phosphorus atom to which the aryl group is attached. Examples of such polar-substituted aryl groups are the 2-methoxy-phenyl group and the 2,4-dimethoxy-phenyl group. Preference is given to components c) in which the groups $R_1$, $R_2$, $R_3$ and $R_4$ are 2-methoxy-phenyl groups.

In the compounds of the general formula $R_1R_2M_1$-R-$M_2R_3R_4$ which are used as components c) in the catalyst compositions, R represents a bivalent bridging group which contains at least two carbon atoms in the bridge. Preferably, bridging group R contains three atoms in the bridge, at least two of which are carbon atoms. Examples of suitable bridging groups R are the -$CH_2$-$CH_2$-$CH_2$-group, the -$CH_2$-$C(CH_3)_2$-$CH_2$- group, the -$CH_2$-Si-$(CH_3)_2$-$CH_2$- group and the -$CH_2$-$C(R_5)(R_6)$-$CH_2$-group wherein $R_5$ represents a methyl group and $R_6$ a diphenyl-phosphino methyl group.

In order to enhance the activity of the present catalyst compositions, it is preferred to incorporate therein a 1,4-quinone as a component d). In addition to optionally alkyl-substituted 1,4-benzoquinones, there are also other eligible 1,4-quinones, such as optionally alkyl-substituted 1,4-naphthoquinones. It is preferred to use 1,4-benzoquinone and 1,4-naphthoquinone as promoters. The quantity of 1,4-quinone used preferably amounts to 10-1000 mol and in particular 25-250 mol per gram atom of palladium.

In the process of the invention the polymerization should be carried out in a ketone/alcohol mixture consisting 50 %vol of one or more $C_{10}^-$ ketones and more than 5 %vol of one or more $C_{10}^-$ alcohols. Preference is given to the use of ketone/alcohol mixtures consisting less than 25 %vol of alcohol. Examples of suitable $C_{10}^-$ ketones are acetone, methyl ethyl ketone, diethyl ketone, ethyl propyl ketone, dipropyl ketone and methyl isobutyl ketone. By preference, ketones having three or four carbon atoms in the molecule are used in the diluent. Examples of suitable $C_{10}^-$ alcohols are methanol, ethanol, n-propanol, isopropanol, n-butanol, isobutanol, n-pentanol and n-hexanol and glycol. By preference, alcohols having one or two carbon atoms in the molecule are used in the diluent. Preference is further given to the use of diluents containing only one $C_{10}^-$ ketone and only one $C_{10}^-$ alcohol, such as a mixture of acetone with methanol or a mixture of methyl ethyl ketone with methanol.

Eligible olefinically unsaturated organic compounds that can be polymerized with carbon monoxide according to the invention are both compounds consisting exclusively of carbon and hydrogen and compounds which, in addition to carbon and hydrogen, contain one or more hetero-atoms. The process according to the invention is preferably used for preparing polymers of carbon monoxide with one or more olefinically unsaturated hydrocarbons. Examples of suitable hydrocarbon monomers are ethene and other α-olefins, such as propene, butene-1, hexene-1 and octene-1, as well as styrene and alkyl-substituted styrenes, such as p-methyl styrene and p-ethyl styrene. The process according to the invention is especially suited to be used for the preparation of copolymers of carbon monoxide and ethene and for the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$-$10^{-3}$, and in particular $10^{-6}$-$10^{-4}$, gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated organic compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

According as the polymers prepared according to the invention have higher molecular weights, their intrinsic viscosities too will as a rule be higher. In order to determine the intrinsic viscosity of a polymer prepared according to the invention, four solutions are first of all prepared by dissolving the polymer in m-cresol at 100 °C, at four different concentrations. Then the viscosity at 100 °C of each of these solutions relative to that of m-cresol at 100 °C is determined in a viscometer. When $T_o$ represents the efflux time of m-cresol and $T_p$ the efflux time of the polymer solution, the relative viscosity ($\eta_{rel}$) is determined by $\eta_{rel} = T_o/T_p$. The inherent viscosity ($\eta_{rel}$) can be calculated from $\eta_{rel}$, according to the formula:
$\eta_{inh} = \ln\eta_{rel} / c$, wherein c represents the polymer concentration as grams per 100 ml of solution. Plotting of the $\eta_{inh}$ found for each of the four polymer solutions against the corresponding concentration (c) and subsequent extrapolation to c = 0 leads to the intrinsic viscosity [$\eta$] as dl/g, which will hereinafter be referred to not as 'intrinsic viscosity', but by the designation recommended by the International Union of Pure and Applied Chemistry of 'Limiting Viscosity Number' (LVN).

The invention is now illustrated with the aid of the following examples.

## Example 1

A carbon monoxide/ethene copolymer was prepared as follows. A mechanically stirred autoclave of 300 ml capacity was charged with 250 ml of methanol. After the contents of the autoclave had been brought to a temperature of 85 °C, a 1:1 carbon monoxide/ethene mixture was introduced into the autoclave until a pressure of 55 bar was reached. A catalyst solution was then introduced into the autoclave, consisting of:
5.5 ml of methanol,
0.019 mmol of palladium acetate,
0.038 mmol of para-toluenesulphonic acid and
0.023 mmol of 1,3-bis(diphenyl-phosphino) propane.

During polymerization, the pressure was maintained at 55 bar by introducing a 1:1 carbon monoxide/ethene mixture. After 3 hours the polymerization was terminated by cooling the reaction mixture down to room temperature and releasing the pressure. The copolymer was filtered off, washed and dried at 50 °C. A copolymer having an LVN of 0.4 dl/g and a bulk density of 0.12 g/ml was obtained. The polymerization rate was 3000 g copolymer/g palladium/hour.

## Example 2

A carbon monoxide/ethene copolymer was prepared substantially in the same way as the copolymer of Example 1, except that now the polymerization temperature employed was 62 °C instead of 85 °C. A copolymer having an LVN of 1.2 dl/g and a bulk density of 0.09 g/ml was obtained. The polymerization rate was 820 g copolymer/g palladium/hour.

## Example 3

A carbon monoxide/ethene copolymer was prepared substantially in the same way as the copolymer of Example 1, except for the following differences:
a) 250 ml of acetone instead of 250 ml of methanol was introduced into the autoclave, and
b) the catalyst solution contained 5.5 ml of acetone instead of 5.5 ml of methanol, and
c) the polymerization time was 1.5 hours instead of 3 hours.

A copolymer having an LVN of 1.0 dl/g and a bulk density of 0.07 g/ml was obtained. The polymerization rate was 730 g copolymer/g palladium/hour.

## Example 4

A carbon monoxide/ethene copolymer was prepared substantially in the same way as the copolymer of Example 1, except that the autoclave was charged with a mixture of 225 ml of methyl propionate and 19.5 ml of methanol instead of 250 ml of methanol. A copolymer having an LVN of 0.7 dl/g and a bulk density of 0.09 g/ml was obtained. The polymerization rate was 1100 g copolymer/g palladium/hour.

## Example 5

A carbon monoxide/ethene copolymer was prepared substantially in the same way as the copolymer of Example 1, except that the autoclave was charged with a mixture of 144.5 ml of methanol and 50 ml of n-heptane instead of 250 ml of methanol. A copolymer having an LVN of 0.8 dl/g and a bulk density of 0.12 g/ml was obtained. The polymerization rate was 2300 g copolymer/g palladium/hour.

## Example 6

A carbon monoxide/ethene copolymer was prepared substantially in the same way as the copolymer of Example 1, except for the following differences:
a) the autoclave was charged with a mixture of 170 ml of methyl ethyl ketone and 24.5 ml of methanol instead of 250 ml of methanol, and
b) the polymerization time was 4.7 hours instead of 3 hours.
A copolymer having an LVN of 0.9 dl/g and a bulk density of 0.20 g/ml was obtained. The polymerization rate was 3000 g copolymer/g palladium/hour.

## Example 7

A carbon monoxide/ethene copolymer was prepared substantially in the same way as the copolymer of Example 1, except that the catalyst solution comprised 0.023 mmol of 2-methyl-2-(diphenyl-phosphino-methyl)--1,3-bis(diphenyl-phosphino) propane instead of 0.023 mmol of 1,3-bis(diphenyl-phosphino) propane. A copolymer having an LVN of 0.4 dl/g and a bulk density of 0.10 g/ml was obtained. The polymerization rate was 4500 g copolymer/g palladium/hour.

## Example 8

A carbon monoxide/ethene copolymer was prepared substantially in the same way as the copolymer of Example 1, except for the following differences:
a) the autoclave was charged with a mixture of 225 ml of acetone and 19.5 ml of methanol instead of 250 ml of methanol,
b) the catalyst solution comprised 0.023 mmol of 2-methyl-2-(diphenyl-phosphino-methyl)-1,3-bis(diphenyl-phosphino) propane instead of 0.023 mmol of 1,3-bis(diphenyl-phosphino) propane, and
c) the polymerization time was 2.6 hours instead of 3 hours.
A copolymer having an LVN of 0.6 dl/g and a bulk density of 0.24 g/ml was obtained. The polymerization rate was 4600 g copolymer/g palladium/hour.

## Example 9

A carbon monoxide/ethene copolymer was prepared substantially in the same way as the copolymer of Example 1, except for the following differences:
a) the autoclave was charged with 250 ml of acetone instead of 250 ml of methanol, and
b) the catalyst solution comprised 0.023 mmol of 2-methyl-2-(diphenyl-phosphino-methyl)-1,3-bis (diphenyl-phosphino) propane instead of 0.023 mmol of 1,3-bis(diphenyl-phosphino) propane, and 5.5 ml of acetone instead of 5.5 ml of methanol.
A copolymer having an LVN of 0.6 dl/g and a bulk density of 0.08 g/ml was obtained. The polymerization rate was 1000 g copolymer/g palladium/hour.

Of Examples 1-9, Examples 6 and 8 are examples according to the invention. In these examples, the monomers were contacted with a solution of the catalyst composition in a ketone/alcohol mixture consisting more than 50 %vol of a $C_{10}^-$ ketone and more than 5 %vol of a $C_{10}^-$ alcohol. Examples 1-5, 7 and 9 are outside the scope of the invention. They have been included in the patent application for comparison. In Examples 1, 2 and 7 the polymerization was carried out in methanol as the diluent and in Examples 3 and 9, in acetone as the diluent. In Examples 4 and 5, the diluents used were a mixture of methyl propionate and methanol, and a mixture of n-heptane and methanol, respectively.

Comparison of the results of Examples 1 and 2 demonstrates that when the polymerization is carried out in methanol as the diluent, reduction of the reaction temperature of from 85 to 62 $^\circ$C leads to a rise in LVN of from 0.4 to 1.2 dl/g, combined with a decrease in bulk density of from 0.12 to 0.09 g/ml and a decrease in polymerization rate of from 3000 to 820 g/g/hour. Comparison of the results of Example 1 with those of Example 3 and those of Example 7 with those of Example 9 shows that replacing methanol as the diluent by acetone, has the same effect as a decrease in reaction temperature, viz. a rise in LVN combined with a fall in bulk density and polymerization rate. This phenomenon is also encountered when part of the methanol is replaced by methyl propionate, as in Example 4. In the partial replacement of methanol by n-heptane executed in Example 5, a fall in polymerization rate was observed besides a rise in LVN.

Comparison of the results of Example 1 with those of Example 6 and of the results of Example 7 with those of Example 8 shows that when part of the methanol is replaced by methyl ethyl ketone or acetone, in such a proportion that the diluent thus obtained consists more than 50 %vol of ketone and more than 5 %vol of alcohol, a rise in LVN occurs, combined with a marked rise in the bulk density, whereas the polymerization rate remains constant.

With the aid of $^{13}$C-NMR analysis it was established that the carbon monoxide/ethene copolymers prepared according to Examples 1-9 had a linear alternating structure and consisted therefore of units of the formula -(CO)-$C_2H_4$-.

## Claims

1. Process for the preparation of polymers by copolymerizing a mixture of carbon monoxide with one or more olefinically unsaturated compounds in the presence of a catalyst composition based upon

a) a palladium compound,

b) an anion of an acid with a pKa of less than 6, and

c) a compound of the general formula $R_1R_2M_1$-R-$M_2R_3R_4$, wherein $M_1$ and $M_2$ represent similar or different elements chosen from the group made up of arsenic, antimony, phosphorus and nitrogen, wherein $R_1$, $R_2$, $R_3$ and $R_4$ represent similar or different hydrocarbon groups which may optionally be substituted with polar groups and wherein R represents a bivalent bridging group containing at least two carbon atoms in the bridge,

characterized in that the copolymerization is effected in a ketone/alcohol mixture comprising more than 50 %vol of one or more aliphatic ketones containing at most 10 carbon atoms, and more than 5 %vol of one or more aliphatic alcohols containing at most 10 carbon atoms.

2. Process as claimed in claim 1, characterized in that a catalyst composition is employed in which $M_1$ and $M_2$ in component c) both represent phosphorus.

3. Process as claimed in claim 1 or 2, characterized in that a catalyst composition is employed in which the groups $R_1$, $R_2$, $R_3$ and $R_4$ present in component c) are phenyl groups, carrying ortho-alkoxy substituents.

4. Process as claimed in one or more of claims 1-3, characterized in that the ketone/alcohol mixture comprises less than 25 %vol of alcohol.

5. Process as claimed in one or more of claims 1-4, characterized in that alcohols containing one or two carbon atoms in the molecule are employed in the ketone/alcohol mixture.

6. Process as claimed in one or more of claims 1-5, characterized in that the ketone is acetone and the alcohol is methanol.

7. Polymers whenever prepared with a process as claimed in any one of claims 1 to 6.